Europäisches Patentamt

European Patent Office

Office européen des brevets

(11) Veröffentlichungsnummer: **0 269 013**
**A2**

(12) **EUROPÄISCHE PATENTANMELDUNG**

(21) Anmeldenummer: 87117140.1

(22) Anmeldetag: 20.11.87

(51) Int. Cl.⁴: **B23Q 17/09**

(30) Priorität: 22.11.86 DE 3639917

(43) Veröffentlichungstag der Anmeldung:
01.06.88 Patentblatt 88/22

(84) Benannte Vertragsstaaten:
BE DE FR GB IT LU NL

(71) Anmelder: **Fried. Krupp Gesellschaft mit beschränkter Haftung**
**Altendorfer Strasse 103**
**D-4300 Essen 1(DE)**

(72) Erfinder: **Mayer, Kurt, Dr.-Ing.**
**Kantorie 58**
**D-4300 Essen 1(DE)**
Erfinder: **Richey, Volker, Dipl.-Ing.**
**Lehmkuhle 21**
**D-4600 Dortmund 41(DE)**
Erfinder: **Schneider, Hans-Peter, Dipl.-Ing.**
**Erich-Ollenhauer-Strasse 40**
**D-5628 Heiligenhaus(DE)**

(54) Vorrichtung zur Früherkennung von Schneidenbrüchen und Grenzverschleiss von Werkzeugen zur spanabhebenden Bearbeitung.

(57) Die Erfindung bezieht sich auf eine Vorrichtung zur Früherkennung von Schneidenbruch und/oder Grenzverschleiß von Werkzeugen zur spanabhebenden Bearbeitung mit Schneidplatten, in deren Schneide mindestens eine isolierte Leiterbahn eingebettet ist, die mit einer Spannungsquelle in Verbindung steht und Teil eines Schaltkreises bildet, der zum Auslösen eines Signals zum Abbrechen des Bearbeitungsvorganges dient. Die Leiterbahn ist dabei Teil eines Wechselstromkreises, der berührungslos mit der Spannungsquelle verbunden ist. In einem Stromkreis, der in der Schneidplatte selbst geschlossen ist, kann mittels einer Induktionsspule im Werkzeug ein Wechselstrom induziert werden, der wiederum von einer im Werkzeug angeordneten Meßspule gemessen wird. Isolierte Leiterbahnen in der Schneidplatte können aber auch kontaktlos mit der Spannungsquelle kapazitiv gekoppelt sein.

## Vorrichtung zur Früherkennung von Schneidenbrüchen und Grenzverschleiß von Werkzeugen zur spanabhebenden Bearbeitung

Die Erfindung bezieht sich auf eine Vorrichtung zur Früherkennung von Schneidenbrüchen und Grenzverschleiß von Werkzeugen zur spanabhebenden Bearbeitung mit Schneidplatten, in deren Schneide mindestens eine isolierte Leiterbahn eingebettet ist, die mit einer Spannungsquelle in Verbindung steht und Teil eines Schaltkreises bildet, der zum Auslösen eines Signals zum Abbrechen des Bearbeitungsvorgangs dient.

In neuerer Zeit gewinnt die Früherkennung von Schneidenbrüchen von Werkzeugen, die in der spanabhebenden Bearbeitung eingesetzt werden, zunehmend Bedeutung. Um eine solche Früherkennung zu erreichen, sind schon verschiedene Vorschläge gemacht worden. So ist z. B. eine Einrichtung bekannt geworden, die sich insbesondere für die Verwendung bei Werkzeugen eignet, die mit sogenannten Wendeschneidplatten ausgestattet sind, die in die Werkzeuge eingesetzt werden. Solche Schneidplatten werden häufig mit nichtleitenden Hartstoffschichten beschichtet, und es ist schon vorgeschlagen worden, in solche Hartstoffschichten in der Nähe der Schneidkanten Leiterbahnen einzubetten, die mit einer Spannungsquelle in Verbindung stehen und Teil eines Stromkreises sind, der zum Auslösen eines Signals zum Abbrechen des Bearbeitungsvorgangs dient.

Bei solchen Wendeschneidplatten ist es erforderlich, einen Kontakt zwischen der Leiterbahn in der auswechselbaren Schneidplatte und dem Werkzeugträger herzustellen, was jedoch nicht nur schwierig ist, sondern auch den Nachteil hat, daß solche Kontakte eine unsichere elektrische Verbindung darstellen. Sie verschmutzen oder korrodieren leicht und leiern mit zunehmender Benutzung aus. Die vorliegende Erfindung bezweckt nun, diesen Mangel zu beseitigen und eine Einrichtung zu schaffen, die eine sichere zuverlässig arbeitende elektrische Verbindung zwischen der Leiterbahn in der Schneidplatte und der Spannungsquelle und den Meßeinrichtungen im Werkzeug ermöglicht. Diese Aufgabe wird nach der Erfindung durch ein Werkzeug mit den kennzeichnenden Merkmalen des Hauptanspruchs der Anmeldung gelöst.

Die in der Schneidplatte isoliert eingebettete Leiterbahn kann Teil eines in ihr vorgesehenen geschlossenen Stromkreises sein, in dem durch eine im Werkzeug vorgesehene Induktionsspule ein Wechselstrom induziert wird, der von einer im Werkzeug angeordneten Meßspule gemessen wird. Induktions-und Meßspule sind im Werkzeug zweckmäßig so nahe an der Schneidplatte angeordnet, daß möglichst viele Feldlinien des Wechselfeldes den Stromkreis der Schneidplatte -

schneiden.

Die in der Schneidplatte eingebettete isolierte Leiterbahn kann aber auch mit der Wechselspannungsquelle kontaktlos über Kondensatorplatten in Verbindung stehen. Dabei können die Kondensatorplatten in der Schneidplatte aus Flächen aus demselben elektrisch leitenden Material bestehen, aus dem auch die Leiterbahn selbst besteht. Sie sind zweckmäßig wie diese in eine Schicht aus nichtleitenden Hartstoffen eingebettet. Als elektrisch nichtleitende Hartstoffschicht kommen Schichten aus Aluminiumoxid, Aluminiumoxinitrid oder Siliciumnitrid in Frage. Die elektrisch nichtleitenden Hartstoffschichten und/oder die elektrisch leitenden Leiterbahnen und die Kondensatorplatten können in bekannter Weise im PVD-oder CVD-Verfahren hergestellt sein, sie können aber beispielsweise auch im Wege des Siebdrucks oder mit Hilfe der Dünnschichttechnik hergestellt werden. Zweckmäßig sind die Leiterbahnen entlang der Hauptschneiden angeordnet, sie können aber auch entlang der Nebenschneiden angeordnet sein, wobei für jede Arbeitsposition der Schneidplatten voneinander unabhängige Leiterbahnenpaare vorgesehen sein können.

Die Zeichnung zeigt Ausführungsbeispiele des Erfindungsgegenstandes, und zwar zeigt

Fig. 1 eine Schneidplatte mit einer Einrichtung zur induktiven Kopplung der Leiterbahnen in der Schneidplatte in schematischer Darstellung,

Fig. 2 die Anordnung der Induktions-und Meßspule in einem Werkzeug,

Fig. 3 eine Wendeschneidplatte mit einer Einrichtung zur kapazitiven Kopplung der Leiterbahnen,

Fig. 4 eine Schneidplatte nach Fig. 3 mit dem zugehörigen Plattensitz im Werkzeug,

Fig. 5 ein Ersatzschaltbild einer Einrichtung nach Fig. 3 vor Bruch der Schneidplatte,

Fig. 6 ein Ersatzschaltbild der Schneidplatte nach Fig. 3 nach Bruch,

Fig. 7 den Spannungsverlauf bei einer entsprechenden Einrichtung vor und nach dem Bruch der Schneidplatte.

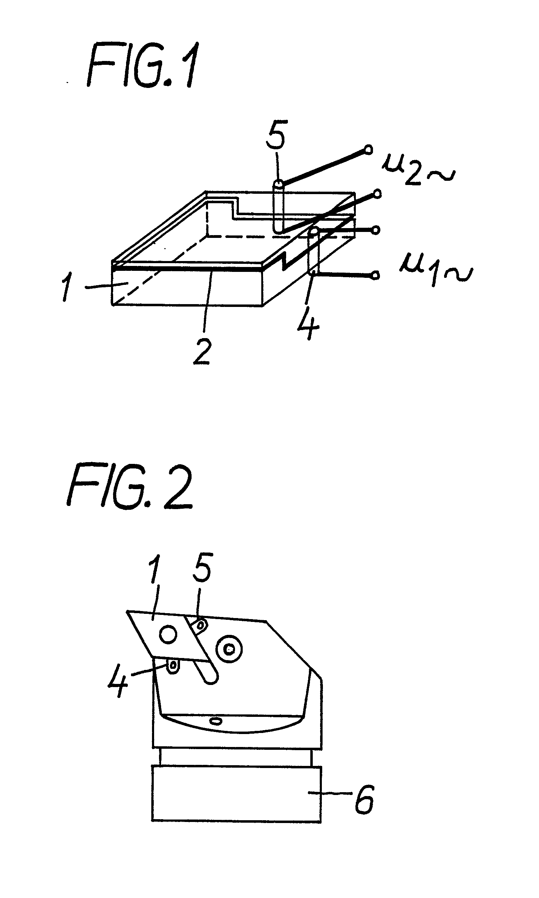

Fig. 1 zeigt Schneidplatte 1 eines Drehwerkzeugs. Der Grundkörper dieser Platte hat einen aus $Al_2O_3$ und $Si_3N_4$ und nichtleitenden Hilfskomponenten bestehenden Kern, dessen Oberfläche mit einer Leiterbahn 2 beschichtet ist, die in ungebrochenem Zustand einen geschlossenen Stromkreis bildet. Diese Leiterbahn ist wiederum mit einer isolierenden Deckschicht z.B. aus $Si_3N_4$ isoliert. In diesem Stromkreis wird durch eine in der Nähe der Schneidplatte im Werkzeug vorgesehene Induktionsspule 4 ein Wechselstrom induziert, der wiederum mit einer ebenfalls in der Nähe des Stromkreises angeordneten Meßspule 5 gemessen werden kann. Da der magnetische Fluß des von der mit Wechselstrom gespeisten Induktionsspule 4 einer zeitlichen Änderung unterliegt, wird auch in der Leiterbahn 2 ein Strom induziert, der - da der Stromkreis der Leiterbahn sich mit einem magnetischen Wechselfeld umgibt - mit der Meßspule an der Schneidplatte gemessen werden kann. Solange der Stromkreis geschlossen, das heißt die Leiterbahn 2 nicht unterbrochen ist, ist an der Meßspule 5 eine in der Amplitude direkt zur Eingangswechselspannung proportionale Wechselspannung meßbar. Tritt aber Bruch oder Grenzverschleiß auf, so wird die Leiterbahn 2 und damit auch der Stromkreis unterbrochen, was zu einem sprunghaften Abfall der Signalamplitude des Meßstroms führt, der in der Meßspule induziert wird. An der Meßspule 5 ist nach dem Bruch weiterhin eine Wechselspannung meßbar, da Induktionsspule 4 und Meßspule 5 aufgrund des geringen Abstandes voneinander gegenseitig induktiv gekoppelt sind.

In Fig. 2 ist ein zum schnellen Wechseln geeignetes Werkzeug 6 mit einer Schneidplatte 1 dargestellt, an dem die Anordnung der Induktionsspule 4 und der Meßspule 5 im Werkzeug 6 veranschaulicht ist.

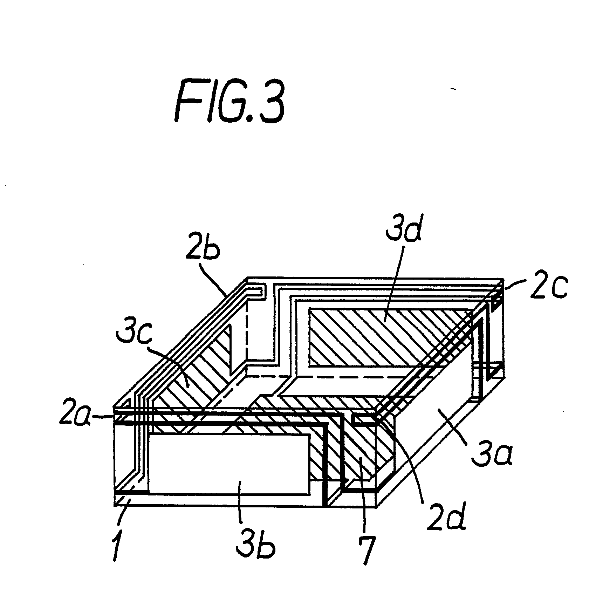

Bei der in Fig. 3 dargestellten Schneidplatte 1 handelt es sich um eine Wendeschneidplatte, bei der vier Schneidkanten auf Bruch bzw. Grenzverschleiß überprüft werden können. An jeder der vier Schneidkanten sind Leiterbahnen 2a, 2b, 2c, 2d angebracht.

Diese vier Leiterbahnen sind einerseits jede für sich mit einer von vier an den Seiten angebrachten Kondensatorplatten 3a, 3b, 3c und 3d und andererseits mit einer Kondensatorplatte 7 auf der Unterseite der Schneidplatte verbunden. Die Leiterbahnen und die Kondensatorplatten sind beide aus gleichem Material und in bekannter Weise auf dem nichtleitenden Grundkörper aufgetragen und mit einer isolierenden Deckschicht z.B. aus $Si_3 N_4$ versehen. Der Grundkörper besteht aus $Al_2 O_3$ und $Si_3 N_4$ und nichtleitenden Hilfskomponenten.

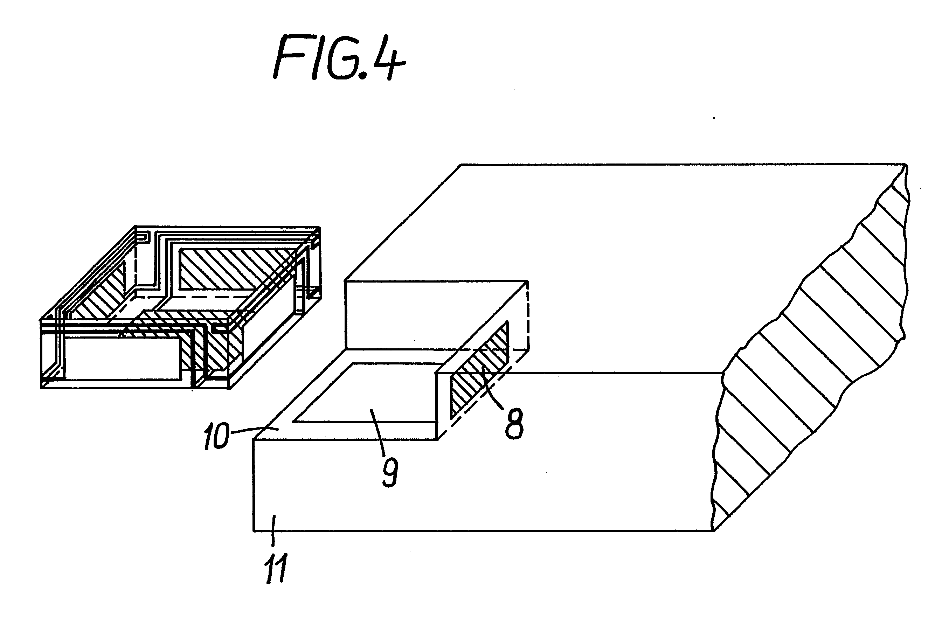

Die entsprechenden Gegenplatten 8, 9 sind wie in Fig. 4 dargestellt im Plattensitz 10 des Werkzeuges 11 angeordnet und sind in eine isolierende Schicht eingebettet.

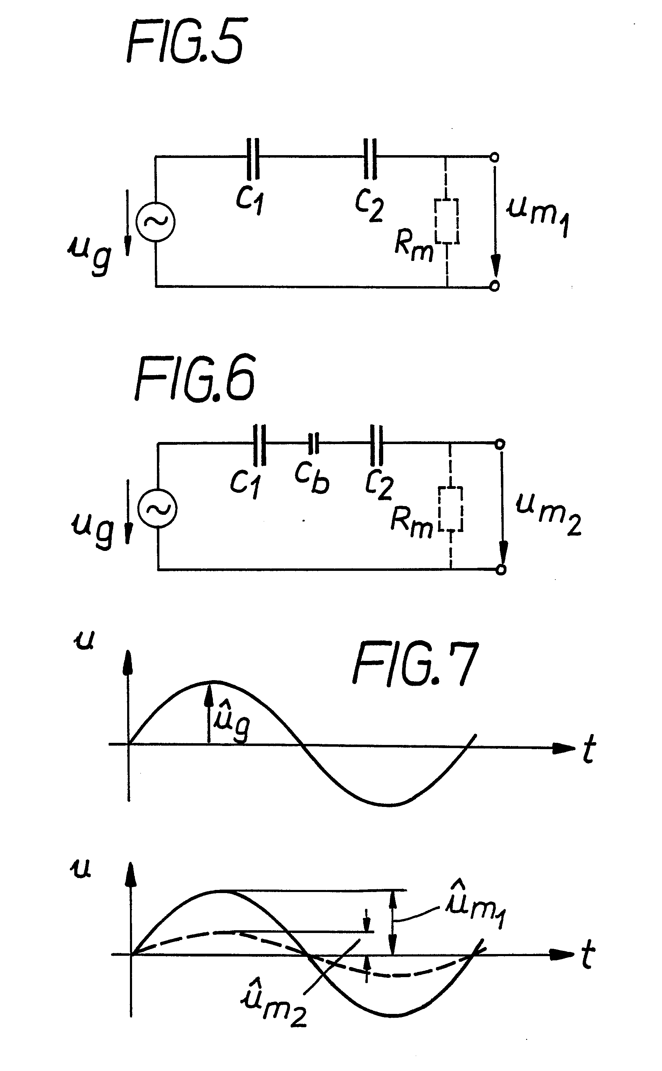

Die Fig. 5 und 6 geben das Meßprinzip bei Anwendung der Erfindung mittels kapazitiver Kopplung in einem Ersatzschaltbild wieder. Wird über einen Generator eine Wechselspannung an dem Kondensator C1 und an Masse gelegt, so ist am Kondensator C2 und an Masse eine dem Eingangssignal proportionale Wechselspannung $u_m$ meßbar, die nach der Formel $u_m = k \cdot u_g$ proportional zur Generatorspannung ist. Dabei läßt sich die Proportionalitätskonstante dadurch ermitteln, daß die beiden in Reihe geschalteten Kondensatoren $C_1$ und $C_2$ eine Gesamtkapazität von

$$C_g = \frac{C_1 \cdot C_2}{C_1 + C_2}$$

ergeben, woraus sich mit dem Widerstand $R_L$ der Leiterbahn eine gesamte Impedanz von

$$\underline{Z}_g = R_L + \frac{1}{jwC_g}$$

ergibt.

Mit dem Eingangswiderstand $R_m$ der Meßstufe errechnet sich die Proportionalitätskonstante

$$k = \frac{R_m}{R_m + Z_g}$$

Nach einem Bruch der Leiterbahn auf der Schneidplatte entsteht zusätzlich zu den Kondensatoren $C_1$ und $C_2$ an der Bruchstelle ein Kondensator $C_b$, wodurch sich die Gesamtkapazität $C_g$ in

$$C_g = \frac{C_1 C_2 C_b}{C_1 C_2 + C_1 C_b + C_2 C_b}$$

ändert.

Den Verlauf der Generator-und der Meßspannung zeigt die Fig. 6, und zwar ist die Meßspannung nach dem Bruch in Fig. 6 mit gestrichelter Linie eingezeichnet.

Da die Kapazität von $C_b$ einen kleineren Wert als die Kondensatoren $C_1$ und $C_2$ hat, erhöht sich der Betrag der Impedanz $Z_g$, und es ergibt sich eine kleiner werdende Konstante k. Die Amplitude von $u_m$ wird also nach einem Bruch der Leiterbahn kleiner.

In weiterer Ausgestaltung der Erfindung können jeweils eine Kondensatorplatte einer Leiterbahn und unterschiedlicher Schneiden zusammengefaßt werden. Die Kondensatorplatten in der Schneidplatte können in den Freiflächen, aber auch in der Auflagefläche angeordnet sein. Es ist schließlich auch möglich, Kondensatorplatten in der Spanfläche anzuordnen, wobei dann die Gegenplatte im Klemmfinger des Werkzeugs angeordnet ist.

**Ansprüche**

1. Vorrichtung zur Früherkennung von Schneidenbrüchen und Grenzverschleiß von Werkzeugen zur spanabhebenden Bearbeitung mit Schneidplatten, in deren Schneide mindestens eine isolierte Leiterbahn eingebettet ist, die mit einer Spannungsquelle in Verbindung steht und Teil eines Schaltkreises bildet, der zum Auslösen eines Signals zum Abbrechen des Bearbeitungsvorganges dient, **dadurch gekennzeichnet,** daß die Leiterbahn Teil eines Wechselstromkreises und berührungslos mit der Spannungsquelle verbunden ist.

2. Vorrichtung nach Anspruch 1, dadurch gekennzeichnet, daß die Leiterbahn Teil eines geschlossenen Stromkreises in der Schneidplatte ist, in dem durch eine im Werkzeug vorgesehene Induktionsspule ein Wechselstrom induziert wird, der von einer im Werkzeug angeordneten Meßspule gemessen wird.

3. Vorrichtung nach Anspruch 2, dadurch gekennzeichnet, daß die Induktions-und die Meßspule im Werkzeug so nahe an der Schneidplatte angeordnet sind, daß möglichst viele Feldlinien des Wechselfeldes den Stromkreis der Schneidplatte -schneiden.

4. Vorrichtung nach Anspruch 1, dadurch gekennzeichnet, daß die in die Schneidplatte eingebettete isolierte Leiterbahn mit der Spannungsquelle kontaktlos über Kondensatorplatten in Verbindung steht.

5. Vorrichtung nach Anspruch 4, dadurch gekennzeichnet, daß die Kondensatorplatten in der Schneidplatte aus metallischen Flächen aus demselben Material wie die Leiterbahn bestehen und wie diese in eine Schicht aus elektrisch nichtleitenden Hartstoffen eingebettet sind.

6. Vorrichtung nach Anspruch 5, dadurch gekennzeichnet, daß die elektrisch nichtleitende Hartstoffschicht aus Aluminiumoxid, Aluminiumoxinitrid oder Siliciumnitrid besteht.

7. Vorrichtung nach Anspruch 6, dadurch gekennzeichnet, daß die elektrisch nichtleitenden Schichten und/oder die Leiterbahnen und die Kondensatorplatten im PVD-oder CVD-Verfahren hergestellt sind.

# FIG.1

# FIG.2

# FIG.3

# FIG.4

0 269 013

0 269 013

FIG.5

FIG.6

FIG.7